# FASCICULE DE BREVET EUROPEEN

(11) **EP 2 353 369 B1**
(45) Date de publication et mention de la délivrance du brevet: **24.04.2013**
(21) Numéro de dépôt: 11290048.5
(22) Date de dépôt: 26.01.2011
(51) Int. Cl.: A01G 9/02, A01G 9/08

(54) **Support pour pots, notamment pour pots utilisés en horticulture**
Ständer für Töpfe, insbesondere für Blumentöpfe im Gartenbau
Pot holder, in particular for pots used in horticulture

(30) Priorité: 28.01.2010 FR 1000341
(43) Date de publication de la demande: 10.08.2011
(73) Titulaire: JP Diffusion, 45500 Gien (FR)
(72) Inventeur: Pouillart, Jean, 45500 Gien (FR)
(74) Mandataire: Demulsant, Xavier

(56) Documents cités:
- EP-A2- 1 913 808
- DE-U1-202004 012 334
- FR-A1- 2 667 573
- FR-A1- 2 852 783
- US-A1- 2004 251 703

## Description

L'invention a trait au domaine des supports pour pots de fleurs ou de plantes en terre de type de ceux utilisés dans l'horticulture, et plus particulièrement des supports permettant de proposer à la vente des lots de pots pour la plantation d'agrément.

Les pots utilisés pour l'agriculture d'agréments peuvent être en terre cuite pour les gros volumes, ou peuvent se présenter en matière plastique pour les éléments les plus petits. Leurs formes sont variées, par exemple circulaires, carrées ou ovales.

Un des problèmes rencontrés est celui de regrouper les pots pour faciliter leur manipulation, notamment lors du transport.

Ainsi, il est connu de transporter ou de présenter les pots associés sur un plateau formant des creux, arrangés en lignes et colonnes, sensiblement complémentaires des pots, tel que l'exemple décrit dans le document US 3,326,410. En variante, tel que décrit dans le document EP 1 004 235, le plateau peut être plat et recouvert d'une plaque sur laquelle des ouvertures sont réparties et au travers desquelles les pots sont placés pour être maintenus droits.

Il est également connu de transporter plusieurs pots dans un panier.

Le document FR 2 852 783 présente un panier à fond ajouré, les pots étant suspendus dans les jours.

Le document FR 2 667 573 décrit également un panier pour transporter les pots. Les pots sont posés sur le fond du panier, et un cadre recouvre le panier. Les plantes peuvent passer au travers du cadre, procurant un support pour les tiges et branches des plantes ou fleurs.

Le document EP 1 913 808 propose de regrouper des pots en les fixant au moyen d'un dispositif en croix venant s'encliqueter sur le rebord des pots.

Bien que les dispositifs de l'art antérieur mentionnés permettent dans une certaine mesure de regrouper des pots, ils ont pour vocation de le faire temporairement, principalement dans un souci de stockage ou de transport, les pots étant individualisés pour la vente.

Le document EP 1 623 658 présente un système pour associer plusieurs pots et les suspendre. Le système comprend plusieurs bras, répartis en étoile. L'extrémité de chaque bras est pourvue d'un crochet sur lequel le bord d'un pot est fixé.

Dans cet exemple encore, les pots ne sont regroupés que temporairement, tant il est facile de les retirer des crochets.

Un support pour pots est aussi connu du document US-A-2004 241703.

Cependant, il peut être avantageux de proposer à la vente les pots en lot, regroupant une ou plusieurs variétés de plantes ou fleurs, formant une composition choisie par le vendeur.

Or, les acheteurs potentiels ont tendance à défaire les lots préparés afin de choisir eux-mêmes les pots. Ainsi, certains pots peuvent être systématiquement écartés par les acheteurs, par exemple pour des raisons esthétiques ou pour remplacer une variété par une autre, ou encore les lots sont défaits par le prélèvement de quelques pots dans chaque lot, rendant les pots restant invendables.

De ce fait, certains pots rencontrant plus de succès que d'autres, des problèmes dans la gestion des stocks peuvent survenir. Par ailleurs, les pots restant invendus conduisent à des pertes financières.

Il existe donc un besoin pour procurer un support pour pots, permettant de présenter des lots de pots tout en empêchant les acheteurs potentiels de prélever des pots.

La présente invention vise à pallier les problèmes mentionnés ci-dessus, en proposant un support pour pots permettant d'associer plusieurs pots sous forme de lot, rendant difficile la séparation des pots.

A cet effet, l'invention propose support pour pots, en particulier pour pots utilisés en horticulture, comprenant :
- un socle monobloc comprenant au moins deux logements jointifs par leur contour autour d'un point central du socle ;
- une tige pour coincer les pots dans les logements, la tige étant pourvue d'une collerette, la collerette étant définie par un bord et un centre et, pour chaque logement du socle, la distance entre le centre de la collerette et son bord étant supérieure ou égale à la distance minimale mesurée sur le socle entre le point central et le contour dudit logement ;
- des moyens pour assembler la tige et le socle, le centre de la collerette étant confondu avec le point central du socle.

Ainsi, l'assemblage de la tige sur socle assure le maintien des pots dans les logements par l'appui de la collerette sur le rebord des pots.

Les moyens pour assembler la tige et le socle comprennent par exemple une ouverture autour du point central, la tige étant munie dans une partie inférieure de moyens pour s'encliqueter dans ladite ouverture, permettant facilement d'assurer l'assemblage de la tige et du socle. Selon le mode de réalisation préféré, ces moyens comprennent un crochet, définissant avec une face inférieure de la collerette une distance supérieure à l'épaisseur du socle.

Le crochet permet d'autoriser le passage de la partie inférieure de la tige au travers de l'ouverture du socle dans un sens mais le bloquant dans l'autre sens.

Selon un mode de réalisation, le socle comprend trois logements répartis en triangle autour du point central, de façon à ce que chaque contour présente une portion qui sera recouverte par la collerette lorsque la tige est assemblée sur le socle.

Le contour des logements peut être par exemple circulaire ou carré, de façon à s'adapter à différentes formes de pots.

Avantageusement, la tige comprend dans une partie supérieure des moyens pour fixer une étiquette, afin d'identifier le contenu des pots et de rendre le produit plus attractif pour des clients potentiels.

Selon le mode de réalisation préféré, la collerette est de forme circulaire, les logements étant disposés à équidistance du point central du support. Le support ainsi formé est aisé à mettre en oeuvre, tout en présentant une esthétique attrayante pour les clients.

D'autres objets et avantages de l'invention apparaîtront à la lumière de la description faite ci-après en référence aux dessins annexés dans lesquels :
- la figure 1 est une vue de dessus d'un socle du support selon un premier mode de réalisation ;
- la figure 2 est une vue de dessus d'un socle du support selon un deuxième mode de réalisation ;
- la figure 3 est une vue de dessus d'une tige du support selon un premier mode de réalisation ;
- la figure 4 est une vue de côté de la tige de la figure 3 ;
- la figure 5 est une vue de côté de la tige selon un deuxième mode de réalisation ;
- la figure 6 est une vue en perspective du support, la tige étant assemblé sur le socle de la figure 1, et sur lequel des pots sont coincés ;
- la figure 7 est une vue de dessus du support de la figure 5 ;
- la figure 8 est une vue de détail de la coupe de la figure 7 selon la ligne VIII-VIII ;
- la figure 9 est une vue en perspective du support, la tige étant assemblé sur le socle de la figure 2, et sur lequel des pots sont coincés ;

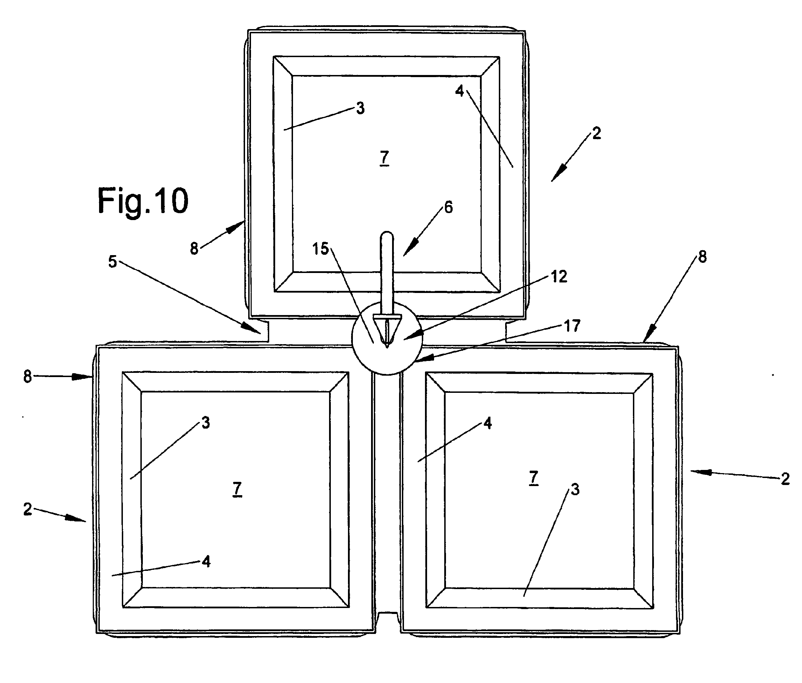

- la figure 10 est une vue de dessus du support de la figure 9.

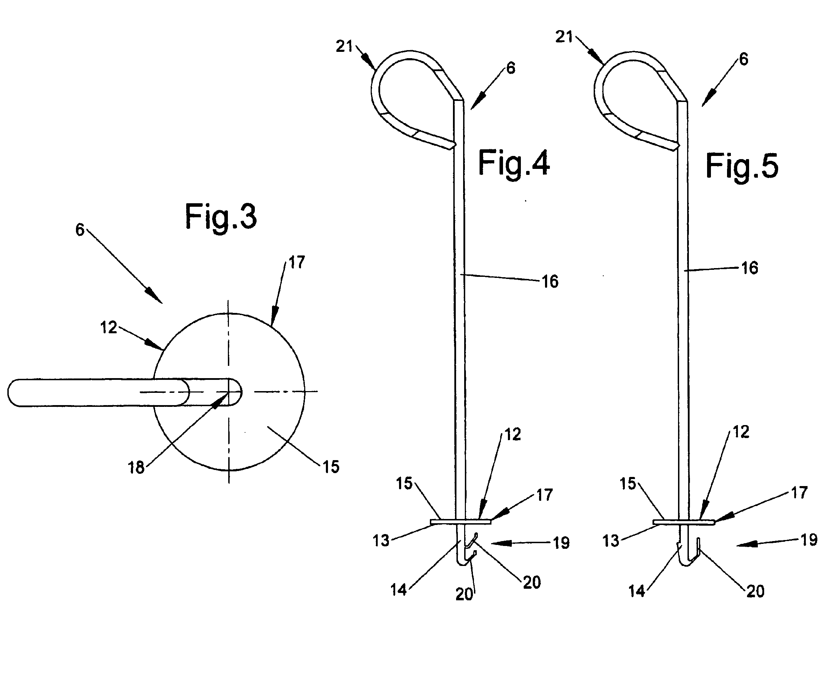

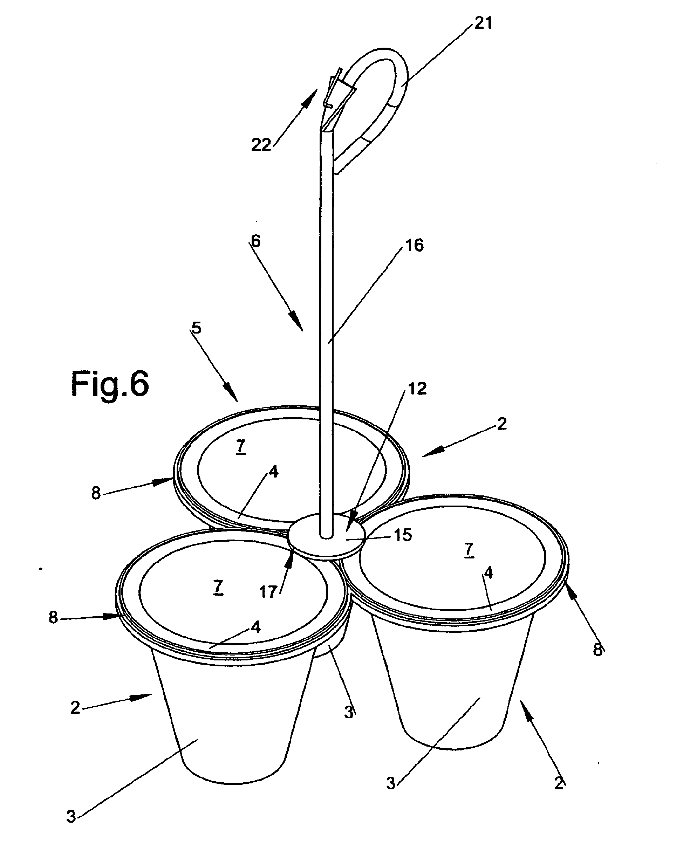

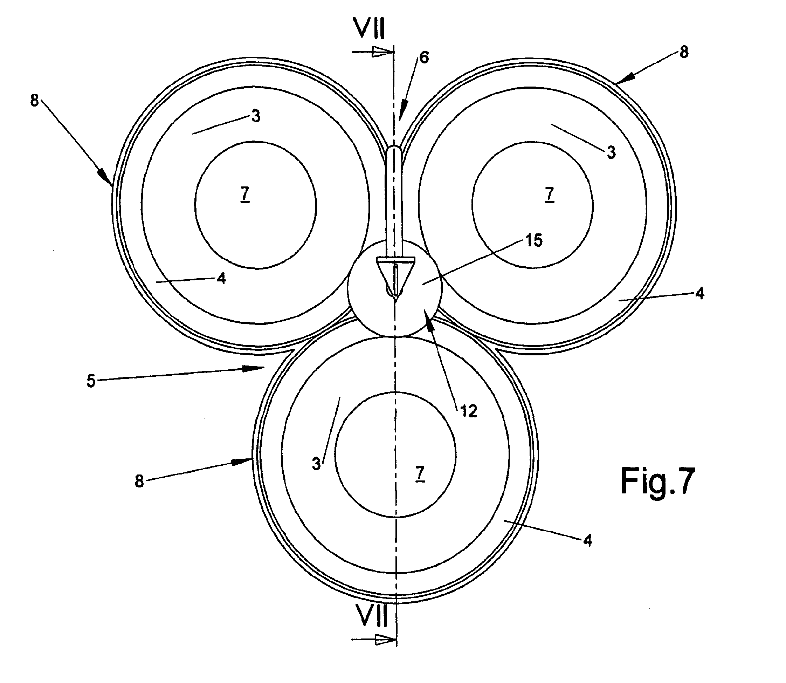

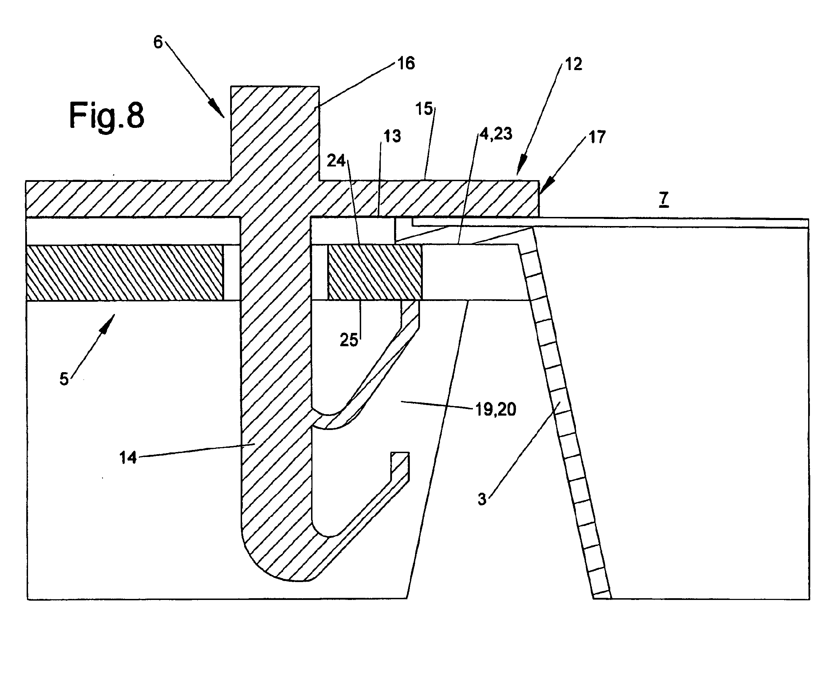

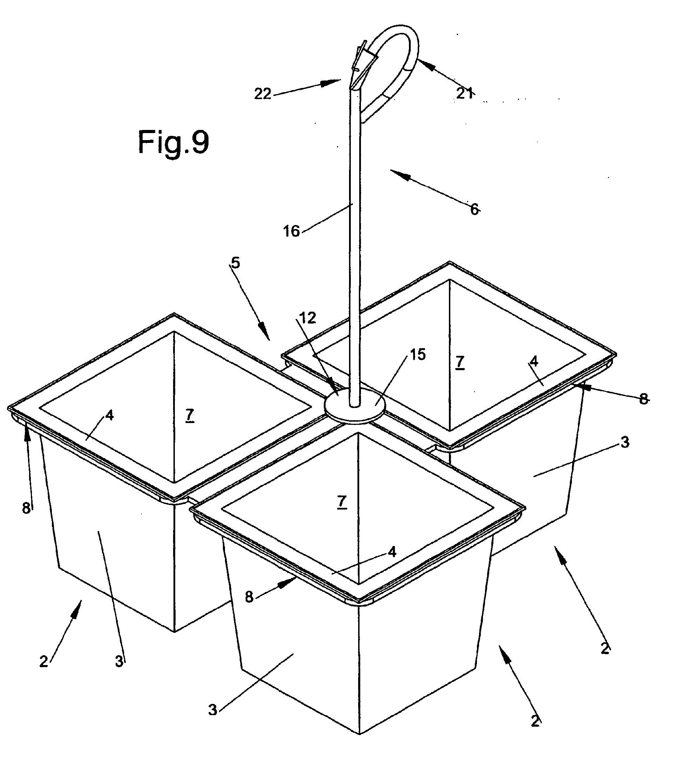

Sur les figures 5 à 9 est représenté un support 1 pour pots 2 selon deux modes de réalisation différents. Les pots 2 sont de type ceux utilisés en horticulture. Ils comportent un corps 3 creux ouvert dans lequel de la terre et la plante sont placés, ainsi qu'un rebord 4 autour de l'ouverture, en saillie sur le corps 3. Les pots 2 sont de préférence en plastique, mais peuvent être en tout autre matériaux connus pour les pots, tel qu'en terre cuite ou en verre.

Le support 1 comprend un socle 5 associé à une tige 6.

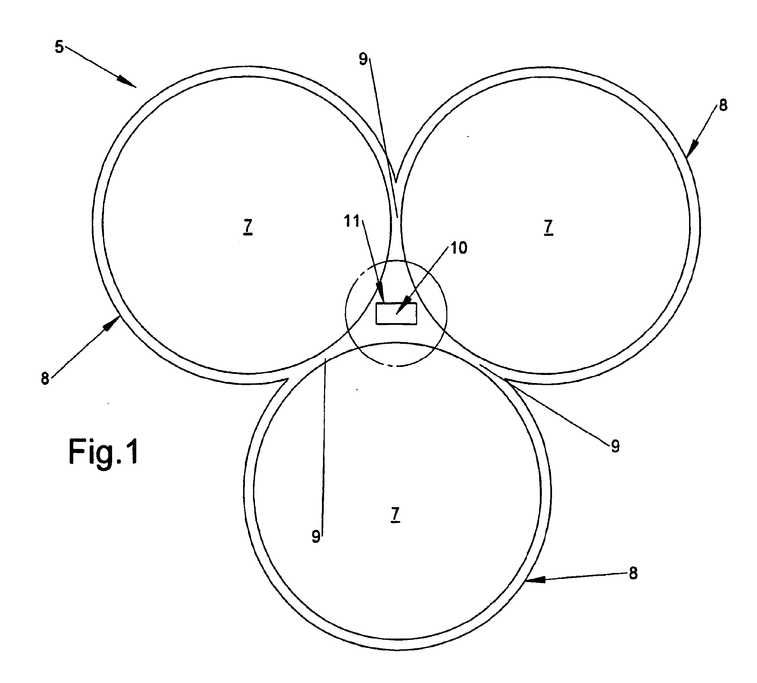

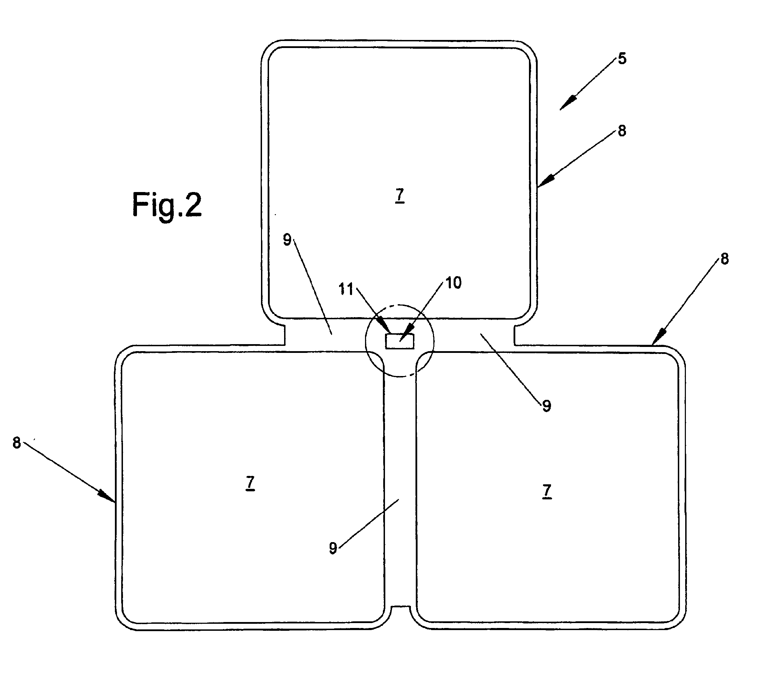

Le socle 5 (figures 1 et 2) se présente sous la forme d'un élément monobloc comprenant au moins deux logements 7. Chaque logement 7 est défini par un contour 8 et est jointif aux autres logements 7 par une portion 9 de son contour 8 autour d'un point 10 appelé point central du socle 5.

Le point 10, bien que qualifié de central, peut être placé n'importe où sur le socle, son rôle étant se servir de référence comme il sera vu plu loin. Toutefois, de manière pratique, le point 10 central est tel que sa distance au contour 8 de chaque logement 7 est minimale. De préférence, le socle 5 comprend trois logements 7 répartis en triangle autour du point 10 central, chaque logement 7 étant jointif aux deux autres.

Le socle 5 est un élément plan, de préférence de quelques millimètres, par exemple trois, d'épaisseur, les logements 7 étant sensiblement coplanaires.

La forme des logements 7 peut être quelconque.

Selon un premier mode de réalisation (figures 1, 5 et 6), le contour 8 des logements 7 est de forme circulaire, chaque cercle étant accolé à deux autres sur une portion 9 de sa circonférence. Les logements 7 ont la même dimension de sorte que le point 10 central du socle est le barycentre du socle.

Selon un deuxième mode de réalisation (figures 2, 8 et 9), le contour 8 des logements 7 ont une forme carrée, chaque carré étant accolé à deux autres sur une portion 9 au moins de deux côtés adjacents.

Les logements 7 peuvent également être, sur un même socle 5, de formes et de dimensions différentes.

Le socle 5 comprend en outre une ouverture 11, de préférence autour du point 10 central.

Le socle 5 peut être réalisé en plastique à partir de tout procédé de fabrication connu, par exemple par moulage ou par découpage.

La tige 6 (figure 3 et 4) comprend une collerette 12, définissant du côté d'une face 13 inférieure de la collerette une partie 14 inférieure, et, du côté d'une face 15 supérieure, de la collerette 12 une partie supérieure 16 de la tige 6.

Telle qu'elle est illustrée sur les figures, la collerette 12 se présente sous la forme d'un disque centré sur la tige 6. Le rayon de la collerette 12 est alors supérieur ou égal à toute distance minimale du point 10 central du socle au contour 8 des logements 7.

La forme de la collerette 12 peut bien entendu être quelconque, la forme circulaire étant la plus simple, et correspondant au cas le plus courant dans lequel les logements 7 sont équidistants du point 10 central du socle 5. L'important est que la collerette 12 recouvre en partie chaque logement 7 lorsque la tige 6 est assemblée sur le socle 5, comme il sera vu plus loin. Ainsi, en considérant que la collerette 12 est définie par un bord 17 et un centre 18, il convient que pour chaque logement 7 du socle 5, il corresponde sur la collerette 12 une distance entre son centre 18 et son bord 17 supérieure ou égale à la distance minimale du contour 8 du logement 7 au point 10 central du socle 5.

Par exemple, selon une variante non représentée sur les figures, la collerette 12 peut se présenter sous la forme de pattes disposées en étoile autour du centre 18 de la collerette, chaque patte ayant une dimension adaptée pour recouvrir au moins partiellement un logement 7 du socle.

Dans le cas où les logements 7 sont au nombre de trois, la collerette 12 peut également se présenter par exemple sous la forme d'un triangle.

Dans la partie 14 inférieure, la tige 6 comporte des moyens 19 pour être assemblée, sur le socle 5. Selon le mode préféré de réalisation, la partie 14 inférieure comporte des moyens d'encliquetage tel qu'au moins un crochet 20, avantageusement élastique, présentant une dimension supérieure à la dimension de l'ouverture 11 centrale du socle 5. Le crochet 20 s'étend en direction de face 13 inférieure de la collerette 12, mais ne la rejoint pas, de façon à définir un espace correspondant sensiblement à l'épaisseur totale du socle 5 et du rebord 4 d'un pot 2.

En variante, la tige 6 peut être assemblée sur le socle par exemple par vissage ou encore par emboitement à force.

La tige 6 peut comporter un ou plusieurs crochets 20, étagés sur la partie 14 inférieure de la tige 6, définissant des espaces de dimensions différentes entre chaque crochet 20 et la face 13 inférieure de la collerette 12, afin de pouvoir utiliser le support 1 sur des pots 2 ayant des rebords 4 de dimensions différentes. Lorsque la tige 6 ne comporte qu'un seul crochet 20 (figure 5), ce dernier est suffisamment flexible pour pouvoir s'écarter de la face 13 inférieure de la collerette 12 et s'adapter à différentes dimensions de rebord 4 de pots 2.

La collerette 12 n'est pas nécessairement centrée sur la partie 14 inférieure de la tige 6 afin, ainsi qu'il sera vu plus loin, de garantir qu'une fois la tige 6 assemblée sur le socle 5, le centre 18 de la collerette 12 soit sensiblement confondu avec le point 10 central du socle 5.

Dans la partie 16 supérieure, la tige 6 est prolongée puis terminée par une boucle 21. Des moyens 22 pour fixer une étiquette, par exemple un crochet, peuvent être prévus.

La tige 6 est assemblée sur le socle 5 de la manière suivante.

Un pot 2 est introduit dans chaque logement 7 du socle 5, une face 23 inférieure du rebord 4 du pot 2 venant en appui sur une face 24 supérieure du socle 5.

La partie 14 inférieure de la tige 6 est introduite dans l'ouverture 11 centrale du socle 5, la face 13 inférieure de la collerette 12 étant en vis-à-vis avec la face 24 supérieure du socle 5. A cet effet, le ou les crochets 20 se déforment pour permettre le passage dans ce sens, puis bloquent le passage dans le sens inverse en reprenant leur forme initiale, le blocage étant d'autant plus efficace que le nombre de crochets 20 est grand. La face 13 inférieure de la collerette 12 est alors en appui contre le rebord 4 du pot 2, qui se trouve ainsi écrasé entre le socle 5 et la collerette 6.

Avantageusement, au moins un crochet 20 est alors en appui sur la face 25 inférieure du socle 5, favorisant davantage l'écrasement du rebord 4 du pot 2.

On comprend que le crochet 20 utilisé dépendra de l'épaisseur du rebord du pot utilisé. Ainsi, plus l'épaisseur du rebord 4 du pot 2 est importante, plus le crochet 20 utilisé sera éloigné de la collerette 12.

Dès lors, les pots 2 se retrouvent coincés entre le socle 5 et la collerette 12, rendant difficile tout retrait des pots 2 de leur logement 7. En effet, pour pouvoir retirer un pot 2, il faut désassembler la tige 5 et le socle 6, ce qui est rendu fastidieux par le ou les crochets 20, de manière à décourager toute personne tentée de le faire.

Le support 1 ainsi décrit permet de former durablement des lots prédéterminés de pots 2, en fonction de leur contenu, en rendant difficile la dissociation des pots 2.

Par ailleurs, le support 1 est de conception simple et est facile à mettre en oeuvre par tout vendeur.

Le support 1 admet une grande diversité de formes et de dimensions, le rendant adaptable à tout type de pots.

En outre, le support 1 permet de présenter les pots 2 de différentes manières : par exemple soit en les posant, le support n'assurant qu'un système de regroupement, soit en les suspendant par le support 1, le support 1 faisant alors office de système de suspension.

## Revendications

1. Support (**1**) pour pots (**2**), en particulier pour pots (**2**) utilisés en horticulture, comprenant :
- un socle (**5**) monobloc comprenant au moins deux logements (**7**) jointifs par leur contour (**8**) autour d'un point (**10**) central du socle (**5**) ;
**caractérisé en ce que** le support comprend :
- une tige (**6**) pour coincer les pots (**2**) dans les logements (**7**), la tige (**6**) étant pourvue d'une collerette (**12**), la collerette (**12**) étant définie par un bord (**17**) et un centre (**18**) et, pour chaque logement (**7**) du socle (5), la distance entre le centre (**18**) de la collerette (**12**) et son bord (**17**) étant supérieure ou égale à la distance minimale mesurée sur le socle (**5**) entre le point (**10**) central et le contour (**8**) dudit logement (**7**) ;
- des moyens (**19**) pour assembler la tige (**6**) et le socle (**5**), le centre (**18**) de la collerette (**12**) étant confondu avec le point (**10**) central du socle (**5**).

2. Support (**1**) pour pots (**2**) selon la revendication 1, dans lequel les moyens (**19**) pour assembler la tige (**6**) et le socle (**5**) comprennent une ouverture (**11**) autour du point (**10**) central, la tige (**6**) étant munie dans une partie (**14**) inférieure de moyens pour s'encliqueter dans ladite ouverture (**11**).

3. Support (**1**) pour pots (**2**) selon la revendication 2, dans lequel la tige (**6**) comprend dans la partie (**14**) inférieure un crochet (**20**), définissant avec une face (**13**) inférieure de la collerette (**12**) une distance supérieure à l'épaisseur du socle (**5**).

4. Support (**1**) pour pots (**2**) selon l'une des revendications 1 à 3, dans lequel le socle (**5**) comprend trois logements (**7**) répartis en triangle autour du point (**10**) central.

5. Support (**1**) pour pots (**2**) selon l'une des revendications 1 à 4, dans lequel le contour (**8**) des logements (**7**) est circulaire.

6. Support (**1**) pour pots (**2**) selon l'une des revendications 1 à 4, dans lequel le contour (**8**) des logements (**7**) est carré.

7. Support (**1**) pour pots (**2**) selon l'une des revendications 1 à 6, dans lequel la tige (**6**) comprend dans une partie (**16**) supérieure des moyens (**22**) pour fixer une étiquette.

8. Support (**1**) pour pots (**2**) selon l'une des revendications 1 à 7, dans lequel la collerette (**12**) est de forme circulaire, les logements (**7**) étant disposés à équidistance du point (**10**) central du support (1).

## Claims

1. Holder (1) for pots (2), particularly pots (2) used in horticulture, comprising:
- a one-piece mount (5) comprising at least two housings (7) that are contiguous in their contour (8) around a central point (10) of the mount (5);
**characterized in that** the holder comprises:
- a stem (6) for wedging the pots (2) in the housings (7), the stem (6) being provided with a flange (12), the flange (12) being defined by an edge (17) and a centre (18) and, for each housing (7) in the mount (5), the distance between the centre (18) of the flange (12) and its edge (17) being greater than or equal to the minimum distance measured on the mount (5) between the central point (10) and the contour (8) of the said housing (7);
- means (19) for assembling the stem (6) with the mount (5), the centre (18) of the flange (12) coinciding with the central point (10) of the mount (5).

2. Holder (1) for pots (2) according to Claim 1, in which the means (19) for assembling the stem (6) with the mount (5) comprise an opening (11) around the central point (10), the stem (6) being equipped in a lower part (14) with means for clip-fastening into the said opening (11).

3. Holder (1) for pots (2) according to Claim 2, in which the stem (6) in the lower part (14) comprises a hook (20) which, with respect to an underside face (13) of the flange (12) defines a distance greater than the thickness of the mount (5).

4. Holder (1) for pots (2) according to one of Claims 1 to 3, in which the mount (5) comprises three housings (7) distributed in a triangle around the central point (10).

5. Holder (1) for pots (2) according to one of Claims 1 to 4, in which the contour (8) of the housings (7) is circular.

6. Holder (1) for pots (2) according to one of Claims 1 to 4, in which the contour (8) of the housings (7) is square.

7. Holder (1) for pots (2) according to one of Claims 1 to 6, in which the stem (6) in an upper part (16) comprises means (22) for affixing a label.

8. Holder (1) for pots (2) according to one of Claims 1 to 7, in which the flange (12) is of circular shape, the housings (7) being positioned at equal distances from the central point (10) of the holder (1).

## Patentansprüche

1. Halter (1) für Töpfe (2), insbesondere für im Gartenbau verwendete Töpfe (2), der enthält:
- eine einstückige Grundplatte (5), die mindestens zwei Aufnahmen (7) enthält, welche über ihren Umfang (8) um einen zentralen Punkt (10) der Grundplatte (5) aneinandergrenzen;
**dadurch gekennzeichnet, dass** der Halter enthält:
- eine Stange (6), um die Töpfe (2) in den Aufnahmen (7) einzuklemmen, wobei die Stange (6) mit einem Kragen (12) versehen ist, wobei der Kragen (12) durch einen Rand (17) und eine Mitte (18) definiert ist, und für jede Aufnahme (7) der Grundplatte (5) der Abstand zwischen der Mitte (18) des Kragens (12) und seinem Rand (17) größer als der oder gleich dem Mindestabstand ist, der auf der Grundplatte (5) zwischen dem zentralen Punkt (10) und dem Umfang (8) der Aufnahme (7) gemessen wird;
- Einrichtungen (19), um die Stange (6) und die Grundplatte (5) zusammenzubauen, wobei die Mitte (18) des Kragens (12) mit dem zentralen Punkt (10) der Grundplatte (5) zusammenfällt.

2. Halter (1) für Töpfe (2) nach Anspruch 1, bei dem die Einrichtungen (19) zum Zusammenbau der Stange (6) und der Grundplatte (5) eine Öffnung (11) um den zentralen Punkt (10) herum enthalten, wobei die Stange (6) in einem unteren Bereich (14) mit Einrichtungen versehen ist, um in die Öffnung (11) einzurasten.

3. Halter (1) für Töpfe (2) nach Anspruch 2, bei dem die Stange (6) im unteren Bereich (14) einen Haken (20) enthält, der mit einer Unterseite (13) des Kragens (12) einen Abstand definiert, der größer ist als die Dicke der Grundplatte (5).

4. Halter (1) für Töpfe (2) nach einem der Ansprüche 1 bis 3, bei dem die Grundplatte (5) drei Aufnahmen (7) enthält, die um den zentralen Punkt (10) herum im Dreieck verteilt sind.

5. Halter (1) für Töpfe (2) nach einem der Ansprüche 1 bis 4, bei dem der Umfang (8) der Aufnahmen (7) kreisförmig ist.

6. Halter (1) für Töpfe (2) nach einem der Ansprüche 1 bis 4, bei dem der Umfang (8) der Aufnahmen (7) quadratisch ist.

7. Halter (1) für Töpfe (2) nach einem der Ansprüche 1 bis 6, bei dem die Stange (6) in einem oberen Bereich (16) Einrichtungen (22) enthält, um ein Etikett zu befestigen.

8. Halter (1) für Töpfe (2) nach einem der Ansprüche 1 bis 7, bei dem der Kragen (12) kreisförmig ist, wobei die Aufnahmen (7) in gleichem Abstand zum zentralen Punkt (10) der Halter (1) angeordnet sind.
